# EUROPÄISCHE PATENTSCHRIFT

(11) **EP 2 247 865 B1**
(45) Veröffentlichungstag und Bekanntmachung des Hinweises auf die Patenterteilung: **26.06.2013**
(21) Anmeldenummer: 09713207.0
(22) Anmeldetag: 11.02.2009
(51) Int. Cl.: F16C 32/04, H01F 7/02

(54) **PERMANENTMAGNET UND DREHLAGER MIT SOLCHEN PERMANENTMAGNETEN**
PERMANENT MAGNET AND ROTARY BEARING HAVING SUCH PERMANENT MAGNETS
AIMANT PERMANENT ET PALIER DE ROTATION POURVU D'UN TEL AIMANT PERMANENT

(30) Priorität: 19.02.2008 DE 102008009734
(43) Veröffentlichungstag der Anmeldung: 10.11.2010
(73) Patentinhaber: MAD, Magnetic Drive AG, 9494 Schaan (LI)
(72) Erfinder: ERLINGHAGEN, Harald, 83620 Feldkirchen-Westerham (DE); KRUG, Walther, 85464 Neufinsing (DE)
(74) Vertreter: Kaminski Harmann
(86) Internationale Anmeldenummer: PCT/EP2009/051520
(87) Internationale Veröffentlichungsnummer: WO 2009/103633

(56) Entgegenhaltungen:
- US-A- 4 992 733
- US-A- 5 506 558

## Beschreibung

Die Erfindung betrifft einen Permanentmagneten nach Anspruch 1 und ein magnetisches Drehlager nach Anspruch 14 mit einer Mehrzahl solcher Permanentmagnete.

Drehlager und hierfür geeignete Permanentmagnete sind beispielsweise aus der DE 20 2005 020 288 U1 bekannt, in der eine permanentmagnetische berührungsfreie Radialdrehkupplung geoffenbart wird, die koaxial angeordnet ein radial inneres sowie ein radial äußeres Organ aufweist, welches jeweils mit Sätzen von Magneten versehen ist. Die Magnete des inneren radialen Organs sind mit den Magneten des äußeren radialen Organs zur Übertragung eines Drehmoments dazwischen jeweils paarweise mit magnetischer Anziehungskraft gekoppelt.

Das Dokument US 5, 506, 558 A offenbart ein Magnetlager mit Permanentmagneten. Das Dokument DE 975 665 offenbart Permanentmagnete mit ferromagnetischen Ummantelungen.

DE 299 22 073 U1 offenbart ein berührungsloses MagnetLager-System mit einer mit derselben Polarität magnetisierten konkaven und einer konvexen Konstruktion, die sehr nahe aneinander angebracht bzw. ineinander gesteckt sind, aber mechanisch durch das Magnetfeld gegeneinander wirken und so nicht miteinander in Berührung kommen.

Insbesondere Radialgroßlager, d.h. Lager mit einem Durchmesser von z.B. größer 500 mm, sind häufig in Baumaschinen zu finden, die unter besonders rauhen Bedingungen arbeiten. Dieses betrifft den Grad der Belastung, die Verschmutzung, die Wartung und Instandsetzung und die Lebensdauer ebensolcher. In diesem Bereich kommen Wälzlager mit hohen Vorspannungen und entsprechend hohen Reibungskräften zum Einsatz.

Die erfindungsgemässe Lagerung mit Permanentmagneten soll diese Probleme minimieren.

Diese Aufgabe wird durch die Verwirklichung der kennzeichnenden Merkmale des unabhängigen Anspruchs 1 gelöst. Merkmale, die die Erfindung in alternativer oder vorteilhafter Weise weiterbilden, sind den abhängigen Patentansprüchen zu entnehmen.

Erfindungsgemäss wird ein Permanentmagnet mit einem Magnetkörper aus einem permanent magnetischen Material ausgebildet, der einen Nordpol und einem Südpol aufweist, wobei der Magnetkörper eine erste und eine zweite Polfläche an gegenüberliegenden Enden mit einer Mantelfläche dazwischen aufweist. Durch eine Ummantelung aus einem ferromagnetischen Material wird der Magnetkörper mit Ausnahme eines Teilbereiches im Bereich der ersten Polfläche umschlossen. Die Ummantelung überdeckt die erste Polfläche teilweise, so dass eine freie Polfläche verbleibt, die nicht von der Ummantelung überdeckt ist.

Solche Permanentmagneten können in einem erfindungsgemässen Drehlager als eine erste Mehrzahl, die in radialer Ausrichtung mit der freien Polfläche nach außen auf einem Innenring angeordnet sind, Verwendung finden. Zusätzlich wird eine zweite Mehrzahl solcher Permanentmagneten in radialer Ausrichtung mit der freien Polfläche nach innen auf einem Außenring angeordnet. Hierbei sind Innen- und Außenring konzentrisch zueinander angeordnet und die Permanentmagnete auf dem Innenring sind so angeordnet, dass die freien Polflächen zweier unmittelbar benachbarter Permanentmagneten nicht unmittelbar einander gegenüberliegen, wobei die Permanentmagnete auf dem Außenring so angeordnet sind, dass die freien Polflächen zweier unmittelbar benachbarter Permanentmagnete nicht unmittelbar einander gegenüberliegen und wobei ein Permanentmagnet im Innenring, der einem Permanentmagnet im Außenring unmittelbar gegenüberliegt, hinsichtlich der Anordnung von freier Polfläche und ummantelter erster Polfläche punktsymmetrisch zu dem Permanentmagnet im Aussenring ist.

Die Erfindung wird anhand eines in der Zeichnung dargestellten Ausführungsbeispiels erläutert. Es zeigt:
- Fig. 1: ein Drehlager mit Außen- und Innenring;
- Fig. 1a: eine Schnittansicht des Drehlagers;
- Fig. 2: eine zusammengebaute Funktionseinheit bestehend aus dem Stabmagneten 5 und den Gehäuseteilen 6,7;

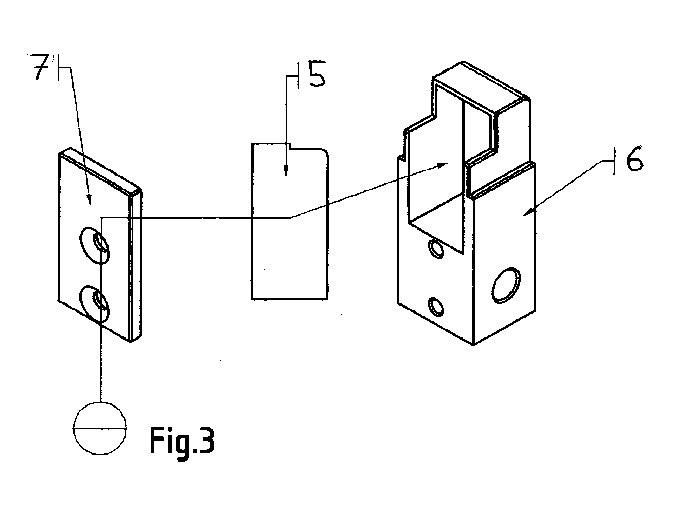

- Fig. 3: die Einzelteile 6,5,7 der Funktionseinheit;
- Fig. 4: Stabmagnet mit Versatz auf der Polfläche;
- Fig. 5: das unipolare Wirkprinzip;
- Fig. 5a: das normale Magnetfeld und
- Fig. 6-6d: verschiedene Stabmagnetgeometrien im Bereich der Polfläche Plus/Minus.

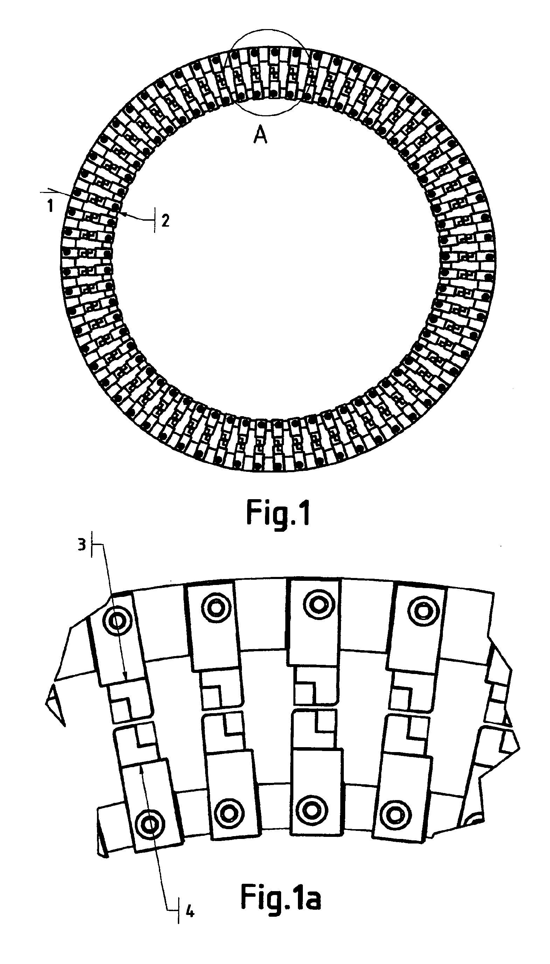

Durch die Erfindung ist es möglich geworden, permanente Magnetfelder derart zu justieren, dass auf einer Polfläche - Plus- oder Minuspol - ein unterschiedliches Magnetfeld wirkt. So kann erreicht werden, dass zwischen Eintritt in das Wirkfeld und Austritt aus dem Wirkfeld eine Differenzkraft entstehen kann. Diese Differenzkraft ist gewünscht, um für ein magnetisches Lager eine Vorzugsrichtung in Drehrichtung gemäß Figur 1, 1a zu erreichen.

In einem Außenring 1 und in einem Innenring 2 werden die gleichpoligen Magneteinheiten 3,4 so angeordnet, dass in Drehrichtung die justierten Flächen der Magneteinheiten zuerst ineinander bewegt werden. Die Differenzkraft innerhalb der Polfläche erzeugt eine Vorzugsrichtung. In Gegenrichtung zum Drehsinn - Vorzugsrichtung - entsteht eine natürliche Drehsperre oder Rücklaufsperre.

Die einzelnen Permanentmagnete können hierbei auf dem Innenring 2 und dem Außenring 1 in Umfangsrichtung im gleichen Abstand zueinander angeordnet sein, wobei die Anzahl der Permanentmagnete im Innenring 2 gleich oder ungleich der Anzahl der Permanentmagnete im Außenring 1 sein kann. Auch kann eine Anordnung der Permanentmagnete im spitzen Winkel zur radialen Richtung von Innen- und Außenring erfolgen.

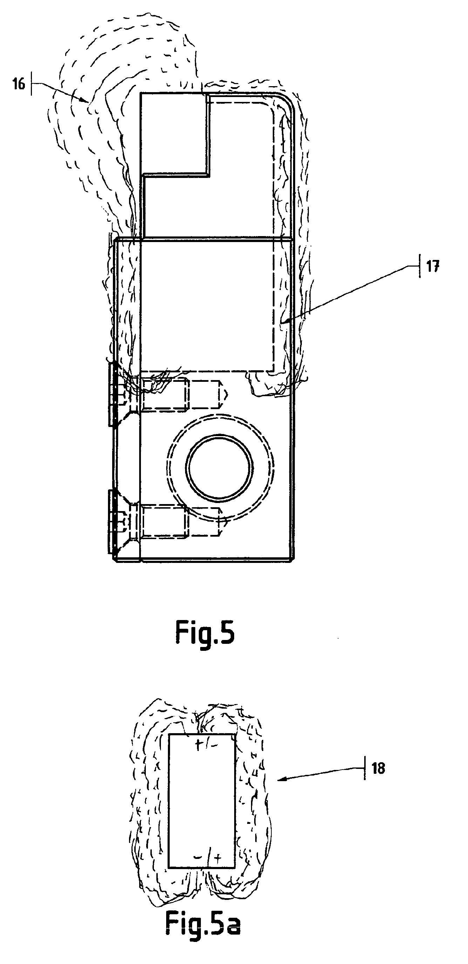

Diese Kraft ist wesentlich vom Eintritts- und Austrittswinkel der beiden Magnetsysteme 3,4 zueinander sowie der Justage der in Figur 5 dargestellten Magnetfeldführung abhängig. Hinzu kommt das voreingestellte Spaltmaß, das zwischen den beiden offenen Magnetfeldern 16 eingestellt wird und in Abhängigkeit zum dynamischen Moment und der Drehzahl gerechnet werden muss.

Die Anwendung ist für permanent magnetisch aufgebaute Radial-Großlager, wie bspw. In Figur 1 dargestellt, über 500 mm Durchmesser bis zu einer maximalen Umdrehungszahl von 50 U/min ausgelegt. In diesem Bereich sind ansonsten Wälzlager mit hohen Vorspannungen und entsprechend hohen Reibungskräften zu finden.

Im Unterschied zum herkömmlichen Lager hat die erfindungsgemässe rein berührungslose magnetische Lagerung keinerlei Reibungskräfte zu verzeichnen. In Drehrichtung gibt es keinerlei Verluste im Übertragungsmoment. Das Lager ist vollkommen wartungsfrei. Es ist nicht anfällig gegen normalen Schmutz. Es können keine umweltschädlichen Fette oder Öle austreten, da nicht vorhanden. Wenn gewünscht oder erforderlich, kann die Lebensdauer eines solchen Lagers größer 700.000 Arbeitstunden ausgelegt werden. Darüber hinaus besteht ein Kostenvorteil gegenüber dem herkömmlichen Wälzlager bei gleicher Baugröße.

Diese Lagerung kann in Maschinen des Über- oder Untertagebaus sowie in allen Anwendungen, die besondere Anforderungen an die Umgebungsvariablen (Reinraumbedingungen) stellt, eingesetzt werden.

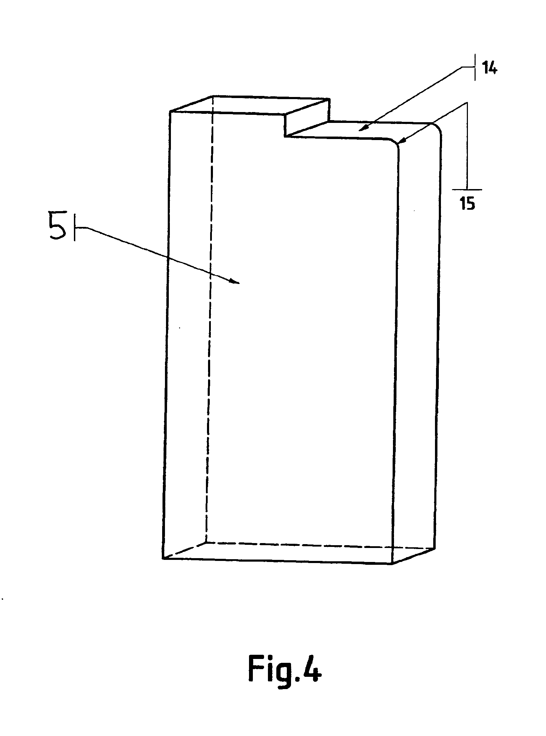

Zur Justierung des Magnetfeldes wird der in Figur 4 exemplarisch dargestellte Magnet 5 mit einem geometrisch besonders bearbeiteten Gehäuse 6,7 aus ferromagnetischem Material ummantelt. Dieses Material ist mit sehr spezifischen physikalischen Eigenschaften versehen. Im wesentlichen handelt es sich um magnetisch hochleitende Materialen, die in reinster Form oder als Legierungen zum Einsatz kommen. Die besonderen physikalischen Eigenschaften des Materials liegen bei einer sehr hohen magnetischen Sättigungsinduktion ≥ 2 Tesla, einer sehr niedrigen Koerzitivfeldstärke und Remanenz und einer hohen Permeabilität. Die Ummantelung kann hierbei eine magnetische Sättigung größer 1,2 Tesla und vorzugsweise im Bereich zwischen 1,3 und 2,5 Tesla aufweisen. In Hinblick auf das Material kann die Ummantelung 6, 7 aus Reineisen oder aus einer Legierung mit Reineisen bestehen.

Dieser Körper 17 ist zusammen mit der zugehörigen Magnetfeldführung in Figur 5 dargestellt und so gearbeitet, dass er an der Eintrittsseite entweder durch eine Fase oder eine Rundung den Übergang aus der aufstehenden Wandung in die waagerechte Wandung - auf dem Pol des Magneten direkt aufliegend - als geschlossener Körper darstellt. In dem Bereich 9, ab dem sich das permanente Magnetfeld von Plus zu Minus umkehrt, wird der Korpus allseitig geschlossen und mit derart hoher Masse - Material - ausgeführt, dass das Magnetfeld im Bereich des Pols annähernd neutral < 10 mT gestaltet wird.

Um die hohe Induktion des Materials voll nutzen zu können, müssen alle Flächen zwischen Magnet und Materialführung feinst bearbeitet sein und vollständig Kontakt haben.

Die wichtigste Fläche des Systems ist die in Figur 4 gezeigte Polfläche 14,15 und deren geometrische Gestaltung. Die betrifft sowohl den Magnetfeldführungskörper 17, vgl. Figur 5, als auch den in Figur 4 gezeigten Stabmagneten.

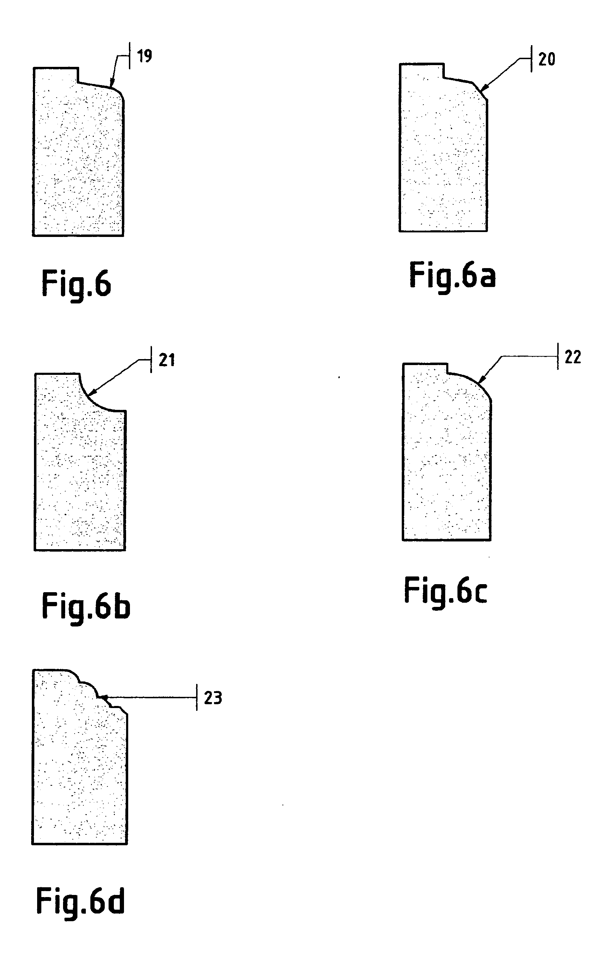

Der in Figur 4 dargestellte Stabmagnet wird in seinem Grundkörper so erhalten, dass das größtmögliche Volumenprodukt = höchstes Magnetfeld erhalten bleibt. Im Bereich des justierten Magnetfeldes auf der Polfläche = Wirkfläche 14 wird der Magnet mit einem Versatz auf der Polfläche versehen. Dieser Versatz, unabhängig von der Form der Polfläche des Magneten - rund oder vieleckig - ist in der Höhe des Versatzes so zu gestalten, dass die neue Polfläche im Versatz die gleiche Poligkeit wie die unbearbeitete Fläche hat. Zur Optimierung der Magnetfeldführung ist die Versatzstufe mit einem entsprechenden Radius 15 oder sonstigen Geometrien, vgl. Figur 6 - 6d, zu gestalten.

Der Magnetkörper kann erfindungsgemäss verschiedene Geometrien aufweisen, so z.B. stabförmig, scheibenförmig oder vieleckig sein. Der Querschnitt kann dabei beispielsweise rechteckig, dreieckig oder trapezförmig ausgebildet sein. Bevorzugterweise ist die durchgehende Stirnfläche plan ausgeformt.

In einem Ausführungsbeispiel weist die erste Polfläche 14 eine Stufe mit einer oberen Stufenfläche, einer unteren Stufenfläche und einer zwischen oberer und unterer Stufenfläche angeordneten Stufenübergangsfläche aufweist, wobei die obere Stufenfläche durch die freie Polfläche gebildet wird.

Der Übergang zwischen Stufenübergangsfläche und unterer Stufenfläche kann so ausgebildet werden, dass dieser im Querschnitt betrachtet winkelig ist. Auch kann der Übergang zwischen unterer Stufenfläche und Mantelfläche zumindest an der der Übergangsfläche gegenüberliegenden Seite der unteren Stufenfläche 19,20 abgeschrägt oder gerundet ausgebildet werden.

In einem anderen Ausführungsbeispiel ist der Übergang zwischen unterer Stufenfläche 21 und Mantelfläche zumindest an der der Übergangsfläche gegenüber liegenden Seite der unteren Stufenfläche konkav.

In einem anderen Ausführungsbeispiel ist der Übergang zwischen unterer Stufenfläche 22 und Mantelfläche zumindest an der der Übergangsfläche gegenüber liegenden Seite der unteren Stufenfläche konvex.

Der Übergang zwischen unterer Stufenfläche 23 und Mantelfläche kann zumindest an der der Übergangsfläche gegenüberliegenden Seite der unteren Stufenfläche, abgeschrägt oder gerundet oder beides sein.

Die Poldeckelfläche des Gehäuses im Bereich des Versatzes ist so auszuführen, dass die Stärke der Wandung des Deckels in Abhängigkeit des permanenten Magnetfeldes Magnetisierungsstärke - das zwischen verbleibendem Magnetfeld Restfeld - und der Anziehungskraft - Haftkraft des Magnetfeldführungsgehäuses - Volumen Gehäusemasse zwischen zwei gegenüberliegenden wirkenden Funktionseinheiten 3,4 ein Gleichgewicht zwischen Anziehungskraft des Gehäusemantels im Bereich der Wirkfläche und der verbleibenden Abstoßungskraft des Restmagnetfeldes - über der in Fig. 5 gezeigten Deckelfläche - als unipolares Wirkprinzip - herrscht.

Ist diese Justierung korrekt ausgeführt, lassen sich zwei gegenüber wirksam liegende gleichpolige permanente Magnetfelder mit geringerem Kraftaufwand ineinander verschieben, als ein gleichpolig abstoßendes Magnetpaar ohne diese spezielle Justierung dieses zulassen würde. Hierdurch entsteht innerhalb des Tragfeldes = Abstoßende Magnetkraft des Magnetlagers eine genau zu bestimmende Differenz, sodass in Drehrichtung eine Vorzugsrichtung bestimmbar und messtechnisch justierbar entsteht.

Die Seitenwandungen des Magnetfeldführungskörpers sind so zu dimensionieren, dass ein entsprechendes Restmagnetfeld in der gleichen Poligkeit wie die Wirkfläche entsteht. Diese Wandungsstärke ist bis in den Bereich des Umkehrpunktes des Magnetfeldes 9 so auszuführen. Innerhalb der Seitenwandung wird eine Ausklinkung der Fläche der Seitenwand in Drehrichtung ausgeklinkt. Das unterstützt die Vorzugsrichtung zusätzlich.

Im Bereich der Polumkehr des Stabmagneten 9 wird die Magnetfeldführung, wie in Figur 5 gezeigt, komplett in einem Korpus geschlossen. Die Wandungsstärke wird derart erhöht, dass ein magnetisch neutrales Feld < 10 mT an der Außenfläche des Korpus entsteht. Im Abstand von circa 8 mm zur Gehäusewandung ist das wirksame Magnetfeld neutral.

Der Boden des Gehäuses 6 wird so stark dimensioniert, dass das Magnetfeld neutralisiert ist und sämtliche zur Befestigung und Montage des Magnetsystems notwendigen Bohrungen oder andere Befestigungsarten enthalten sind und die eigentliche Funktion nicht beeinflusst wird.

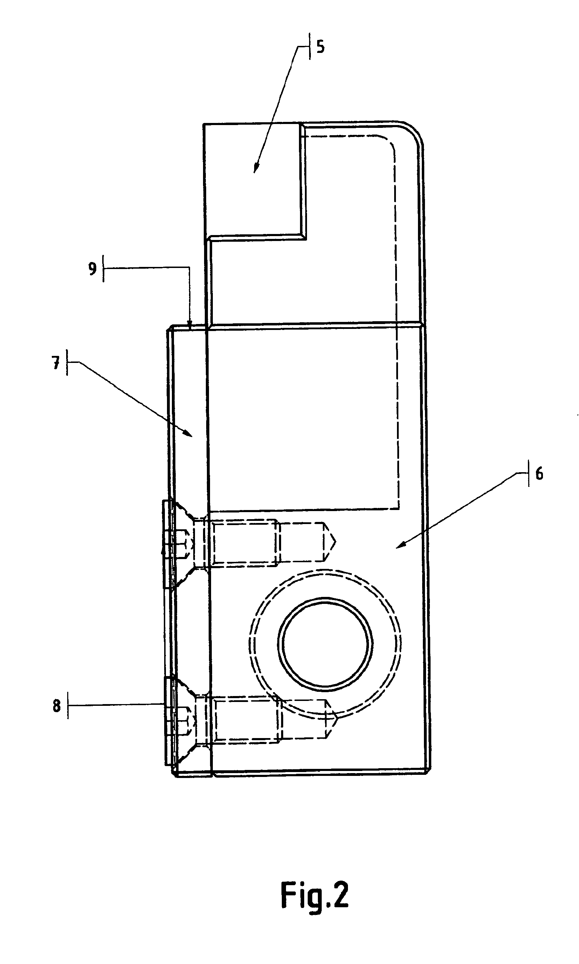

Der Verschlussdeckel 7 wird aus dem gleichen Material ausgeführt wie der Magnetfeldführungskörper 6. Der Deckel schließt im Bereich des Umkehrpunktes 9 des Magnetfeldes ab. In Figur 2 sind die Größe und die Befestigungsart des Verschlussdeckels dargestellt.

Das Wirkprinzip wird in Figur 5 erläutert. Die Funktionseinheit generiert ein monopolares Magnetfeld, das in seiner Wirkrichtung und Feldstärke genau justiert werden kann. Durch die besondere Ausführung des Magnetfeldführungskörpers bleibt das ursprüngliche Magnetfeld 18 nur in der freien offenen Polfläche 16 und damit in einer genau definierbaren Wirkrichtung erhalten. Das restliche Magnetfeld wird innerhalb der Wandung des Magnetfeldführungskörpers 6,7 so gebeugt und geführt und voll erhalten 17, dass die Stabilität des gesamten Magnetfeldes nicht verändert oder geschwächt wird. Dieses ist für die Funktion des Magneten und des Magnetfeldes eine Voraussetzung.

Dabei kann der Teilbereich ohne Ummantelung zwischen 4% und 40% der Oberfläche des Magnetkörpers betragen. Es ist erfindungsgemäss möglich, die Ummantelung 6 im Bereich der ersten Polfläche 14 dünner auszubilden als im übrigen Bereich.

Die Ummantelung 6 kann auch so ausgeführt werden, dass sie sich über die zweite Polfläche hinaus erstreckt und als Befestigungseinrichtung für den Permanentmagneten ausgebildet ist.

Die erste Polfläche des Magnetkörpers weist im Querschnitt betrachtet ein von einer Geraden abweichendes Profil auf und die die erste Polfläche 14 teilweise überdeckende Ummantelung 6 und die freie Polfläche bilden eine durchgehende Stirnfläche, wobei die Stirnfläche plan sein kann. Die Ummantelung 6 überdeckt teilweise die erste Polfläche 14 , so dass eine freie Polfläche verbleibt, die nicht von der Ummantelung überdeckt ist. Zudem kann die Ummantelung 6 im Bereich der ersten Polfläche 14 dünner als im übrigen Bereich ausgeführt werden.

In einer weiteren Fortbildung dieses Ausführungsbeispiels kann die erste Polfläche 14 eine Stufe mit einer oberen Stufenfläche, einer unteren Stufenfläche und einer zwischen oberer und unterer Stufenfläche angeordneten Stufenübergangsfläche aufweisen, und die obere Stufenfläche durch die freie Polfläche gebildet werden. Dabei kann der Übergang zwischen Stufenübergangsfläche und unterer Stufenfläche im Querschnitt betrachtet winkelig sein.

Ebenso kann der Übergang zwischen freier Polfläche und Stufenübergangsfläche im Querschnitt betrachtet winkelig ausgebildet werden, insbesondere rechtwinkelig sein.

Wirbelfelder: Im Bereich des Gehäusebodens, d.h. im geschlossenen Gehäuse 6,7, ist in Abhängigkeit der Magnetisierungsstärke die Magnetfeldführung bzw. Wandungsstärke so groß auszuführen, dass das Magnetfeld vollkommen im Material gefangen ist und nach außen magnetisch neutral verläuft. Somit ist gewährleistet, dass keine störenden Wechselfelder oder komprimierte Wirbelfelder entstehen, welche die Funktion des Magnetlagers beeinflussen können.

Überdies können durch diese Bauweise alle wichtigen Konstruktionswerkstoffe im Bereich der statischen Konstruktion des Lagers eingesetzt werden ohne Gefahr zu laufen, dass diese durch das permanente Magnetfeld beeinflusst werden.

## Patentansprüche

1. Permanentmagnet mit einem Magnetkörper aus einem permanent magnetischen Material, der einen Nordpol und einem Südpol aufweist, wobei der Magnetkörper eine erste und eine zweite Polfläche an gegenüberliegenden Enden mit einer Mantelfläche dazwischen aufweist, und einer Ummantelung (6, 7) aus einem ferromagnetischen Material, die den Magnetkörper mit Ausnahme eines Teilbereiches im Bereich der ersten Polfläche umschließt, wobei
die Ummantelung (6) die erste Polfläche (14) teilweise überdeckt, so dass eine freie Polfläche verbleibt, die nicht von der Ummantelung überdeckt ist, **dadurch gekennzeichnet,** insbesondere dass die Ummantelung (6) im Bereich der ersten Polfläche (14) dünner ist als im übrigen Bereich,
- dass die erste Polfläche des Magnetkörpers im Querschnitt betrachtet ein von einer Geraden abweichendes Profil aufweist, und
- dass die die erste Polfläche (14) teilweise überdeckende Ummantelung (6) und die freie Polfläche eine durchgehende, insbesondere plane, Stirnfläche bilden.

2. Permanentmagnet nach Anspruch 1,
**dadurch gekennzeichnet,**
**dass** die Ummantelung eine magnetische Sättigung größer 1,2 Tesla und vorzugsweise im Bereich zwischen 1,3 und 2,5 Tesla aufweist.

3. Permanentmagnet nach Anspruch 1 oder 2,
**dadurch gekennzeichnet,**
**dass** die Ummantelung (6,7) aus Reineisen oder einer Legierung mit Reineisen besteht.

4. Permanentmagnet nach einem der vorhergehenden Ansprüche,
**dadurch gekennzeichnet,**
**dass** der Teilbereich ohne Ummantelung zwischen 4% und 40% der Oberfläche des Magnetkörpers beträgt.

5. Permanentmagnet nach einem der vorhergehenden Ansprüche,
**dadurch gekennzeichnet,**
**dass** der Magnetkörper stabförmig ist.

6. Permanentmagnet nach einem der vorhergehenden Ansprüche 1 bis 4,
**dadurch gekennzeichnet,**
**dass** der Magnetkörper scheibenförmig oder vieleckig ist.

7. Permanentmagnet nach einem der vorhergehenden Ansprüche,
**dadurch gekennzeichnet,**
- **dass** die erste Polfläche (14) eine Stufe mit einer oberen Stufenfläche, einer unteren Stufenfläche und einer zwischen oberer und unterer Stufenfläche angeordneten Stufenübergangsfläche aufweist, und
- **dass** die obere Stufenfläche durch die freie Polfläche gebildet ist.

8. Permanentmagnet nach Anspruch 7,
**dadurch gekennzeichnet,**
**dass** der Übergang zwischen Stufenübergangsfläche und unterer Stufenfläche im Querschnitt betrachtet winkelig ist.

9. Permanentmagnet nach Anspruch 7 oder 8,
**dadurch gekennzeichnet,**
**dass** der Übergang zwischen freier Polfläche und Stufenübergangsfläche im Querschnitt betrachtet winkelig, insbesondere rechtwinkelig ist.

10. Permanentmagnet nach einem der vorhergehenden Ansprüche,
**dadurch gekennzeichnet,**
**dass** der Magnetkörper einen rechteckigen Querschnitt aufweist.

11. Permanentmagnet nach einem der vorhergehenden Ansprüche,
**dadurch gekennzeichnet,**
**dass** der Magnetkörper einen dreieckigen oder einen trapezförmigen Querschnitt aufweist.

12. Permanentmagnet nach einem der vorhergehenden Ansprüche,
**dadurch gekennzeichnet,**
**dass** sich die Ummantelung (6) über die zweite Polfläche hinaus erstreckt und als Befestigungseinrichtung für den Permanentmagneten ausgebildet ist.

13. Permanentmagnet nach einem der vorhergehenden Ansprüche,
**dadurch gekennzeichnet,**
**dass** der Übergang zwischen unterer Stufenfläche (23) und Mantelfläche zumindest an der der Übergangsfläche gegenüberliegenden Seite der unteren Stufenfläche, abgeschrägt oder gerundet oder beides oder konkav oder konvex ist.

14. Drehlager mit einer ersten Mehrzahl von Permanentmagneten nach einem der vorhergehenden Ansprüche, die in radialer Ausrichtung mit der freien Polfläche nach außen auf einem Innenring (2) angeordnet sind,
● einer zweiten Mehrzahl von Permanentmagneten nach einem der vorhergehenden Ansprüche, die in radialer Ausrichtung mit der freien Polfläche nach innen auf einem Außenring (1) angeordnet sind,
● wobei Innen- und Außenring (1,2) konzentrisch zueinander angeordnet sind,
● wobei die Permanentmagnete auf dem Innenring (2) so angeordnet sind, dass die freien Polflächen zweier unmittelbar benachbarter Permanentmagneten nicht unmittelbar einander gegenüberliegen,
● wobei die Permanentmagnete auf dem Außenring (1) so angeordnet sind, dass die freien Polflächen zweier unmittelbar benachbarter Permanentmagnete nicht unmittelbar einander gegenüberliegen und
● wobei ein Permanentmagnet im Innenring, der einem Permanentmagnet im Außenring unmittelbar gegenüberliegt, hinsichtlich der Anordnung von freier Polfläche und ummantelter erster Polfläche punktsymmetrisch zu dem Permanentmagnet im Außenring ist,
● insbesondere wobei die Permanentmagnete im spitzen Winkel zur radialen Richtung von Innen- und Außenring angeordnet sind.

15. Drehlager nach Anspruch 14,
**dadurch gekennzeichnet,**
**dass** die einzelnen Permanentmagnete auf dem Innen- und dem Außenring in Umfangsrichtung im gleichen Abstand zueinander angeordnet sind, insbesondere wobei die Anzahl der Permanentmagnete im Innenring gleich oder ungleich der Anzahl der Permanentmagnete im Außenring ist.

## Claims

1. A permanent magnet having a magnet body composed of a permanently magnetic material, which has a north pole and a south pole, wherein the magnet body has a first pole surface and a second pole surface at opposite ends with an envelope surface in between, and having a sheath (6, 7) composed of a ferromagnetic material, which surrounds the magnet body with the exception of a subarea in the area of the first pole surface, wherein
the sheath (6) partially covers the first pole surface (14) such that a free pole surface remains which is not covered by the sheath,
**characterized**
- **in that,** in particular, the sheath (6) is thinner in the area of the first pole surface (14) than in the rest of the area,
- **in that** the first pole surface of the magnet body has a cross section with a profile which is not a straight line, **and**
- **in that** the sheath (6), which partially covers the first pole surface (14), and the free pole surface form a continuous, in particular planar, end surface.

2. The permanent magnet as claimed in claim 1,
**characterized in that** the sheath has a magnetic saturation greater than 1.2 Tesla, and preferably in the range between 1.3 and 2.5 Tesla.

3. The permanent magnet as claimed in claim 1 or 2,
**characterized in that** the sheath (6, 7) is composed of pure iron or an alloy with pure iron.

4. The permanent magnet as claimed in any one of the preceding claims
**characterized in that**
the subarea without a sheath is between 4% and 40% of the surface of the magnet body.

5. The permanent magnet as claimed in any one of the preceding claims,
**characterized in that**
the magnet body is in the form of a bar.

6. The permanent magnet as claimed in any one of the preceding claims,
**characterized in that**
the magnet body is in the form of a disk or is polygonal.

7. The permanent magnet as claimed in any one of the preceding claims,
**characterized**
- **in that** the first pole surface (14) has a step with an upper step surface, a lower step surface and a step transition surface which is arranged between the upper and the lower end surfaces, and
- **in that** the upper step surface is formed by the free pole surface.

8. The permanent magnet as claimed in claim 7,
**characterized in that**
the transition between the step transition surface and the lower step surface has an angled cross section.

9. The permanent magnet as claimed in claim 7 or 8,
**characterized in that**
the transition between the free pole surface and the step transition surface has an angled cross section, in particular a right-angled cross section.

10. The permanent magnet as claimed in any one of the preceding claims,
**characterized in that**
the magnet body has a rectangular cross section.

11. The permanent magnet as claimed in any one of the preceding claims,
**characterized in that**
the magnet body has a triangular or a trapezoidal cross section.

12. The permanent magnet as claimed in any one of the preceding claims,
**characterized in that**
the sheath (6) extends beyond the second pole surface and is in the form of an attachment device for the permanent magnet.

13. The permanent magnet as claimed in any one of the preceding claims,
**characterized in that**
the transition between the lower step surface (23) and the envelope surface, at least on the side of the lower step surface opposite the transition surface, is inclined or rounded or both or concave or convex.

14. A rotating bearing having a first plurality of permanent magnets as claimed in any one of the preceding claims, which are arranged on an inner ring (2), aligned radially with the free pole surface toward the outside,
● a second plurality of permanent magnets as claimed in any one of the preceding claims, which are arranged on an outer ring (1), aligned radially with the free pole surface toward the inside,
● wherein the inner ring (2) and outer ring (1) are arranged concentrically with respect to one another,
● wherein the permanent magnets on the inner ring (2) are arranged such that the free pole surfaces of two directly adjacent permanent magnets are not directly opposite one another,
● wherein the permanent magnets on the outer ring (1) are arranged such that the free pole surfaces of two directly adjacent permanent magnets are not directly opposite one another, and
● wherein a permanent magnet in the inner ring which is directly opposite a permanent magnet in the outer ring, with respect to the arrangement of the free pole surface and immediately first pole surface, is positioned with point symmetry with respect to the permanent magnet in the outer ring,
● particularly wherein the permanent magnets are arranged at an acute angle to the radial direction of the inner ring and outer ring.

15. The rotating bearing as claimed in claim 14,
**characterized in that**
the individual permanent magnets on the inner ring and on the outer ring are arranged at the same distance from one another in the circumferential direction, particularly wherein the number of permanent magnets in the inner ring is equal or unequal to the number of permanent magnets in the outer ring.

## Revendications

1. Aimant permanent avec un corps d'aimant en un matériau magnétique permanent qui présente un pôle nord et un pôle sud, le corps d'aimant présentant une première et une seconde surface de pôle à des extrémités opposées avec une surface d'enveloppe entre deux et avec un enrobage (6, 7) en un matériau ferromagnétique qui enferme le corps d'aimant à l'exception d'une zone partielle dans la zone de la première surface de pôle,
l'enrobage (6) recouvrant partiellement la première surface de pôle (14) si bien qu'il reste une surface de pôle libre qui n'est pas recouverte par l'enrobage,
**caractérisé en ce**
**qu'**en particulier l'enrobage (6) est plus mince dans la zone de la première surface de pôle (14) que dans le reste de la zone,
**que** la première surface de pôle du corps d'aimant présente un profil qui diffère d'une droite, ceci étant vu en section transversale, et
**que** l'enrobage (6) qui recouvre partiellement la première surface de pôle (14) et la surface de pôle libre forment une face frontale continue, en particulier plane.

2. Aimant permanent selon la revendication 1,
**caractérisé en ce**
**que** l'enrobage présente une saturation magnétique supérieure à 1,2 Tesla et de préférence de l'ordre entre 1,3 et 2,5 Tesla.

3. Aimant permanent selon la revendication 1 ou 2,
**caractérisé en ce**
**que** l'enrobage (6, 7) est constitué en fer pur ou en un alliage avec du fer pur.

4. Aimant permanent selon l'une des revendications précédentes,
**caractérisé en ce**
**que** la zone partielle sans enrobage fait entre 4% et 40% de la surface du corps de l'aimant.

5. Aimant permanent selon l'une des revendications précédentes,
**caractérisé en ce**
**que** le corps de l'aimant est en forme de barre.

6. Aimant permanent selon l'une des revendications précédentes 1 à 4,
**caractérisé en ce**
**que** le corps de l'aimant est en forme de disque ou est polygonal.

7. Aimant permanent selon l'une des revendications précédentes,
**caractérisé en ce**
- **que** la première surface de pôle (14) présente un étage avec une surface d'étage supérieure, une surface d'étage inférieure et une surface de transition d'étage placée entre la surface d'étage supérieure et la surface d'étage inférieure et
- **que** la surface d'étage supérieure est formée par la surface de pôle libre.

8. Aimant permanent selon la revendication 7,
**caractérisé en ce**
**que** la transition entre la surface de transition d'étage et la surface d'étage inférieure est angulaire, ceci étant observé en section transversale.

9. Aimant permanent selon la revendication 7 ou 8,
**caractérisé en ce**
**que** la transition entre la surface de pôle libre et la surface de transition d'étage est angulaire, en particulier à angles droits, ceci étant observé en section transversale.

10. Aimant permanent selon l'une des revendications précédentes,
**caractérisé en ce**
**que** le corps d'aimant présente une section transversale rectangulaire.

11. Aimant permanent selon l'une des revendications précédentes,
**caractérisé en ce**
**que** le corps d'aimant présente une section transversale triangulaire ou trapézoïdale.

12. Aimant permanent selon l'une des revendications précédentes,
**caractérisé en ce**
**que** l'enrobage (6) s'étend au-delà de la seconde surface de pôle et est configuré comme un dispositif de fixation pour l'aimant permanent.

13. Aimant permanent selon l'une des revendications précédentes,
**caractérisé en ce**
**que** la transition entre la surface d'étage inférieure (23) et la surface d'enveloppe est chanfreinée au moins sur le côté de la surface d'étage inférieure qui est en face de la surface de transition ou est arrondie ou les deux ou est concave ou convexe.

14. Palier de rotation avec une première multitude d'aimants permanents selon l'une des revendications précédentes qui sont placés sur un anneau intérieur (2) dans l'orientation radiale avec la surface de pôle libre vers l'extérieur,
● une seconde multitude d'aimants permanents selon l'une des revendications précédentes qui sont placés sur un anneau extérieur (1) dans l'orientation radiale avec la surface de pôle libre vers l'intérieur,
● l'anneau intérieur et l'anneau extérieur (1, 2) étant placés concentriques l'un par rapport à l'autre,
● les aimants permanents étant placés sur l'anneau intérieur (2) de telle manière que les surfaces de pôle libres de deux aimants permanents directement voisins ne sont pas directement en face l'une de l'autre,
● les aimants permanents étant placés sur l'anneau extérieur (1) de telle manière que les surfaces de pôle libres de deux aimants permanents directement voisins ne sont pas directement en face l'une de l'autre et
● un aimant permanent dans l'anneau intérieur qui est directement en face d'un aimant permanent dans l'anneau extérieur, est symétrique par points à l'aimant permanent dans l'anneau extérieur pour ce qui est de la disposition de la surface de pôle libre et de la première surface de pôle enrobée
● cependant que en particulier les aimants permanents sont placés dans l'angle aigu par rapport au sens radial de l'anneau intérieur et de l'anneau extérieur.

15. Palier de rotation selon la revendication 14,
**caractérisé en ce**
**que** les différents aimants permanents sont placés sur l'anneau intérieur et sur l'anneau extérieur dans le sens de la circonférence à égale distance l'un par rapport à l'autre, cependant que en particulier le nombre des aimants permanents dans l'anneau intérieur est égal ou inégal au nombre des aimants permanents dans l'anneau extérieur.
